# EUROPÄISCHE PATENTSCHRIFT

(11) **EP 2 221 176 B1**
(45) Veröffentlichungstag und Bekanntmachung des Hinweises auf die Patenterteilung: **30.03.2011**
(21) Anmeldenummer: 10401021.0
(22) Anmeldetag: 09.02.2010
(51) Int. Cl.: B32B 37/12, B41M 7/00, B05D 1/12, B05D 3/14

(54) **Kaschierverfahren sowie Kaschiervorrichtung**
Laminating method and device
Procédé et dispositif pour recouvrir

(30) Priorität: 12.02.2009 DE 102009003473
(43) Veröffentlichungstag der Anmeldung: 25.08.2010
(73) Patentinhaber: FSD Folienservice Deutschland GmbH, 29331 Lachendorf (DE)
(72) Erfinder: Schür, Patrick, 29331 Lachendorf (DE); Schür, Mark-Henning, 29331 Lachendorf (DE)
(74) Vertreter: Hansen, Jochen

(56) Entgegenhaltungen:
- EP-A2- 1 323 577
- WO-A1-2005/000482
- US-A1- 2003 138 582

## Beschreibung

Die Erfindung betrifft ein Kaschierverfahren zur Herstellung von mit einer Folie kaschierten Druckware sowie eine Kaschiervorrichtung zur Durchführung des Verfahrens.

Im Stand der Technik sind im Wesentlichen zwei Kaschierverfahren bekannt.

Beim Thermoverfahren werden Kunststoffkaschierfolien nach der Herstellung mit einem Thermoplast beschichtet. Im weiteren Ablauf wird die mit dem Thermoplast beschichtete Folie über eine erhitzte Walze gerollt, wobei sich der Thermoplast verflüssigt. Beim nachfolgenden Aufeinanderpressen der Kaschierfolie auf die Druckware, wird die Folie auf der Druckware vollflächig verklebt. Zwar sind die für dieses Verfahren erforderlichen Kaschiervorrichtungen kostengünstig. Jedoch sind die Thermoplast beschichteten Kaschierfolien deutlich teuerer als unbeschichtete Folien.

Ferner ist das sog. Nassverfahren bekannt, bei dem ein in wässriger Dispersion vorliegender Klebstoff in einer Kaschiermaschine zwischen der Kaschierfolie und der Druckware aufgebracht wird. Die Kaschierfolie wird wiederum durch Zusammenpressen auf der Druckware verklebt. Bei diesem Verfahren können zwar günstige beschichtete Folien verwendet werden, jedoch sind die Kaschiermaschinen sehr teuer und der Wasser basierte Klebstoff ist frostempfindlich.

Aus der EP 1 638 697 A1 ist darüber hinaus ein Verfahren zur elektrostatischen Aufbringung von puderförmigem Klebstoff auf nicht metallische Substrate und ein mit puderförmigem Klebstoff beschichtetes nicht metallisches Substrat bekannt. Diese Schrift betrifft das Aufbringen von puderförmigem Klebstoff auf flächigen Materialien, Papier oder Plastik und späteres Aktivieren des Klebstoffs, beispielsweise durch Erwärmen. Dabei wird das Puder vor dem Aufbringen auf dem flächigen Element elektrostatisch geladen und dann auf dem nicht metallischen Substrat aufgebracht.

Ferner ist aus der WO 03/076083 A1 ein Verfahren zur Beschichtung einer ebenen Oberfläche bekannt, bei dem mittels elektrostatischer Kräfte eine granulatförmige Schicht aufgebracht wird und nachfolgend zur Bildung der Beschichtung endbearbeitet wird. Insbesondere handelt es sich bei der granulatförmigen Beschichtung um einen Kunststoff, der mittels einer erwärmten Walze aufgeschmolzen wird und den Beschichtungsfilm für das flächige Material bildet. Nach dem dort betriebenen Verfahren werden mehrschichtige Verpackungsmaterialien, insbesondere für Lebensmittel, erzeugt. Das granulatförmig aufgetragene Material stellt dabei selbst die zu bildende Beschichtung auf der Oberfläche dar.

Weiter ist aus der WO 02/45869 A1 ein Verfahren zum Trockenauftrag eines Schutz- und/oder Klebstoffmaterials auf Geweben oder Oberflächen bekannt, bei dem ein pulverförmiger Polymer mit einer Partikelgröße von 0,01 bis 500 µm mit einem lonenstrahl-Verfahren auf das Gewebe oder die Oberfläche trocken aufgebracht wird. Die Oberfläche kann aus Papier, Karton, Polymerfilm, Metallfolie auch als bewegtes Gewebe ausgebildet sein.

Die Druckschrift WO 2005 / 000 482 A1 offenbart ein Kaschierverfahren, nämlich Auftragen von pulverförmigem Klebstoff auf eine Seite einer Folie, wobei der pulverförmige Klebstoff mit einer elektrostatischen Aufladung versehen ist, Erwärmen der mit dem pulverförmigen Klebstoff versehenen Folie und Aufpressen der mit dem erwärmten Klebstoff versehenen Folie auf ein zu kaschierendes Substrat.

Die Druckschrift DE 23 02 592 A offenbart ein Verfahren zur Herstellung von Verbundplatten, die aus einer Polyäthylenplatte und einer wenigstens einseitigen metallischen Deckschicht bestehen, wobei die oberflächlich aktivierte Polyäthylenplatte unter Zwischenlage eines Haftmittels mit der Deckschicht heiß verpresst wird. Verfahrensgemäß wird die Polyäthylenplatte gegebenenfalls beidseitig kurzzeitig einer Corona-Entladung mit einer zwischen 20 und 50 kHz, vorzugsweise 40 kHz, betragenden Frequenz ausgesetzt, wonach als Haftmittel ein bei Normaltemperatur zunächst nicht klebfähiges, pulverförmige Äthylen-Copolymerisate enthaltendes Gemisch zur Anwendung kommt und die Verpressung bei einer Temperatur von 120-2000 °C und einem Druck von 1,5 - 3,0 kp/cm2 erfolgt. Die Coronaentladung erfolgt hierbei zwischen zwei schneidenförmigen Elektroden.

Aus der Druckschrift DE 692 33 196 T2 ist ein Verfahren zum Kleben von zwei Stücken bekannt, wobei ein Kleber umfassend ein Polymid in Form eines Pulvers oder einer Folie zwischen die zu klebenden Stücke eingebracht wird und die Stücke dann unter hoher Temperatur und hohem Druck aneinander gefügt werden.

Weiter ist aus der DE 102 14 006 A1 ein Verfahren zur Herstellung von Verbundfolien bekannt, die durch Verkleben einer ersten Folie mit einer zweiten Folie mittels eines lösungsmittelfreien Klebersystems hergestellt werden, wobei in einer ersten Stufe das Klebersystem auf die Auftragstemperatur vorgewärmt wird, in einer zweiten Stufe das auf die Auftragstemperatur vorgewärmte Klebersystem, gegebenenfalls nach Vermischen von einzelnen Klebersystemkomponenten, auf die erste Folie aufgebracht wird, und in einer dritten Stufe die mit dem Klebersystem eingestrichene erste Folie unter Kühlung mit einer zulaufenden zweiten Folie verbunden wird.

In den drei zuerst genannten druckschriftlich belegten Verfahren wird jeweils das aufzubringende Pulver-Granulat elektrostatisch geladen und dann auf die zu beschichtende Oberfläche aufgebracht. Nachteilig ist, dass die dafür geeigneten Vorrichtungen insbesondere bei einer größeren Arbeitsbreite aufwendig sind, da es besonders schwierig ist, eine gleichmäßige Bepuderung der mit dem Pulver zu versehenden Oberfläche zu erreichen.

Aufgabe der Erfindung ist es daher, ein Kaschierverfahren bzw. eine Kaschiervorrichtung anzugeben, bei der auf eine elektrostatische Aufladung des aufzubringenden Pulvers verzichtet werden kann.

Gelöst wird diese Aufgabe mit einem Kaschierverfahren nach Anspruch 1 und einer Kaschiervorrichtung gemäß Anspruch 5.

Überraschenderweise hat sich herausgestellt, dass durch elektrostatische Aufladung der mit dem Puder zu versehenden Folie eine sehr gleichmäßige Bepuderung seiner Oberfläche ohne aufwendige Abstimmung etwaiger anzulegender elektrischer Potenziale an dem Pulverauftragmittel erfolgt.

Dadurch, dass die Folie ein aufgerolltes Endlosprodukt ist und erst kurz vor dem Auftragen des Klebstoffes abgerollt wird, wobei das statische Aufladen der Folie vor dem Aufrollen, beim Aufrollen oder beim Abrollen erfolgt, wird eine sichere und schnelle kontinuierliche Produktion der kaschierten Druckware ermöglicht. Die als sog. Endlosprodukt in großer Produktionslänge aufgerollte Folie kann vom Bedienpersonal leicht gehandhabt werden und ist vor Beschädigungen weitgehend geschützt. Ferner kann die aufgerollte Folie problemlos transportiert und gelagert werden. Das elektrostatische Aufladen der Folie kann vor dem Aufrollen der Folie, beim Aufrollen der Folie oder beim Abrollen erfolgen. Überraschenderweise hat sich gezeigt, dass eine elektrostatische Aufladung der Folie auch nach längerer Lagerung noch in ausreichendem Maße vorhanden ist. Es ist daher möglich, dass bei der Produktion der Folie die elektrostatische Aufladung erfolgt und anschließend die aufgerollte Folie zum Kaschierdienstleister transportiert und/oder bedarfsweise zwischengelagert wird. Somit kann die Produktion der Folie völlig unabhängig von der Ausführung des Kaschierverfahrens, beispielsweise auch in anderen Kontinenten erfolgen. Bevorzugt wird jedoch die Folie erst beim Abrollen elektrostatisch aufgerollt, um so die Kontrolle über die Stärke der elektrostatischen Aufladung unmittelbar beim Kaschierprozess ausüben zu können.

Wenn nach dem Auftragen des pulverförmigen Klebstoffes unmittelbar das Erwärmen des Klebstoffes erfolgt, wird ein Abrieseln auch von kleineren Mengen des pulverförmigen Klebstoffes weitestgehend vermieden. Mit dem Erwärmen des Klebstoffes wird dieser auf der Oberfläche der Folie quasi fixiert, da der Klebstoff bevorzugt ein Schmelzklebstoff (sog. Hotmelts) ist. Er wird also beim Erwärmen angeschmolzen.

Die eingangs dargestellte Aufgabe wird vorrichtungsgemäß gelöst mit einer Kaschiervorrichtung, die ein Auftragmittel zum Auftragen von pulverförmigem Klebstoff auf einer Seite der Folie, eine Wärmeeinrichtung zum Erwärmen der mit dem pulverförmigem Klebstoff belegten Folie und eine Presseinrichtung zum Aufpressen der mit dem erwärmten Klebstoff versehenen Folie auf die zu kaschierende Druckware aufweist. Mit dieser Vorrichtung kann eine zuvor elektrostatisch aufgeladene Folie in verfahrensgemäßer Weise auf eine Druckware kaschiert werden. Der pulverförmige Klebstoff, der bevorzugt ein Schmelzklebstoff ist, wird trocken mit dem Auftragmittel auf die elektrotstatisch aufgeladene Folie aufgebracht. Durch die Wärmeeinrichtung schmilzt der Klebstoff an, wonach die Presseinrichtung die mit dem aufgeschmolzenen Klebstoff versehene Folie auf die zu kaschierende Druckware aufpresst und vollflächig verklebt.

Wenn in Arbeitsrichtung vor dem Auftragmittel ein Aufladungsmittel zum elektrostatischen Aufladen der zugeführten Folie vorgesehen ist, erfolgt die elektrostatische Aufladung unmittelbar vor dem Klebstoffauftrag.

Dadurch, dass die Folie endlos auf einer Rolle vorgehalten ist und eine erste Abwickel-Haspel für die aufgerollte Folie in Arbeitsrichtung vor dem Auftragmittel vorgesehen ist, kann die Kaschiervorrichtung in hoher Arbeitsgeschwindigkeit kontinuierlich arbeiten, was eine hohe Produktivität ergibt.

Wenn die Wärmeeinrichtung eine Heizwalze hat, um die die Folie in wärmeleitendem Kontakt herumgeführt wird, wird eine gleichmäßige Erwärmung der Folie erreicht. Die Folie steht dabei bevorzugt mit ihrer nicht mit Klebstoff bepuderten Rückseite in Kontakt mit der Heizwalze. Eine Verschmutzung der Heizwalze mit aufgeschmolzenem Klebstoff wird somit verhindert.

Dadurch, dass die Presseinrichtung eine Anpresswalze und eine Gegenwalze oder ein Förderband zum zur zugeführten Folie synchronen Transport der zu kaschierenden Druckware hat, wird eine vollflächige Verklebung der Folie auf der zu kaschierenden Druckware gewährleistet. Ferner wird eine hohe Arbeitsgeschwindigkeit bei gleichzeitig niedriger Störanfälligkeit erreicht, was ebenfalls zu hoher Produktivität führt.

In einer weiter bevorzugten Ausgestaltung kann die Heizwalze und die Anpresswalze als eine gemeinsame Walze ausgebildet sein, womit der technische Aufwand möglichst gering gehalten wird und folglich Herstellungskosten für die Kaschiervorrichtung und Wartungskosten eingespart werden können.

Wenn die Druckware endlos auf einer Rolle vorgehalten ist und eine zweite Abwickel-Haspel für die aufgerollte Druckware in Arbeitsrichtung vor der Anpresswalze vorgesehen ist, werden die Vorteile eines Endlosproduktes auch für die Druckware ausgenutzt. Die Störanfälligkeit des Kaschierverfahrens wird weiter reduziert, was zu noch besserer Produktivität führt.

Bevorzugt ist in Arbeitsrichtung nach der Anpresswalze eine Aufwickel-Haspel vorgesehen, mit der die kaschierte Druckware aufwickelt werden kann.

Nachfolgend wird ein Ausführungsbeispiel der Erfinderung anhand der beiliegenden Figur erläutert.

Darin zeigt:

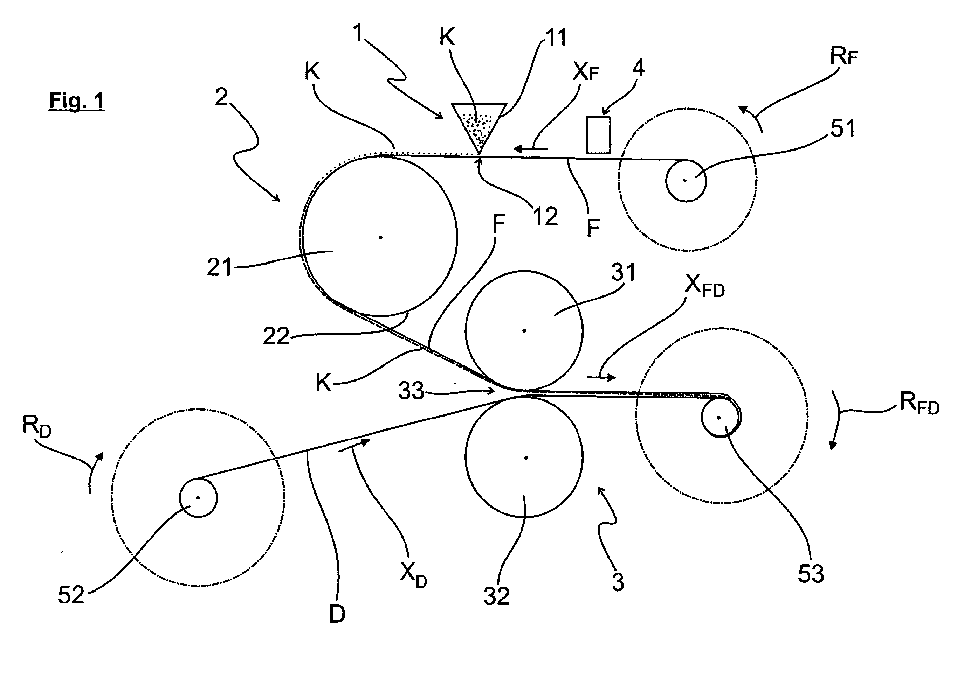

- Fig. 1: eine Prinzipskizze der Kaschiervorrichtung.

In Fig. 1 ist eine Kaschiervorrichtung in einer Prinzipskizze dargestellt. Die für die Kaschierung vorgesehene Folie F ist als sog. Endlosprodukt aufgerollt auf einer ersten Abwickel-Haspel 51 bevorratet. Von der ersten Abwickel-Haspel 51 führt die abgerollte Bahn der Folie F in Arbeitsrichtung der Folie X_{F} zuerst an einem Aufladungsmittel 4 und dann an einem Auftragmittel 1 entlang zu einer Wärmeeinrichtung 2, die in Form einer Heizwalze 21 ausgebildet ist.

Das Auftragmittel 1 weist einen Vorratsbehälter 11 für den aufzubringenden pulverförmigen Klebstoff und eine Austragöffnung 12 auf. Die Austragöffnung 12 ist so ausgebildet, dass die Folie F über die gesamte Arbeitsbreite gleichmäßig mit dem pulverförmigen Klebstoff K bepudert wird.

Die Heizwalze 21 weist eine beheizte Oberfläche 22, nämlich die Mantelfläche der Heizwalze 21 auf. In weiterer Arbeitsrichtung der Folie X_{F} ist eine Presseinrichtung 3 bestehend aus einer Anpresswalze 31 und einer Gegenwalze 32. Die Anpresswalze 31 ist mit einem Anpressdruck in Richtung der Gegenwalze 32 beaufschlagt.

Ferner ist stromaufwärtig der Presseinrichtung 3 eine zweite Abwickel-Haspel 52 angeordnet, auf der die zu kaschierende Druckware D aufgerollt als Endlosprodukt vorgehalten wird. Die Druckware D ist zusammen mit der Folie F in einen zwischen der Anpresswalze 31 und der Gegenwalze 32 ausgebildeten Spalt 33 derart eingeführt, dass die Folie F auf die Druckware D vollflächig aufgepresst wird.

In weiterer Arbeitsrichtung der Folien-kaschierten Druckware X_{FD} ist dann eine Aufwickel-Haspel 53 angeordnet, die die fertig kaschierte Druckware D aufrollt.

Nachfolgend wird das Kaschierverfahren anhand der in Fig. 1 gezeigten Kaschiervorrichtung beschrieben. Die für die Kaschierung vorgesehene Folie F wird von einer Vorratsrolle auf der Haspel 51 als Endlosware in Drehrichtung R_{F} abgerollt. Zunächst führt die Folienbahn an dem Aufladungsmittel 4 vorbei, womit die Oberfläche der Folie F elektrostatisch aufgeladen wird. In weiterer Arbeitsrichtung der Folie X_{F} wird der pulverförmige Klebstoff K mit dem Auftragmittel 1 auf die in Fig. 1 nach oben zeigende Oberfläche der Folie F aufgetragen.

Der trockene und pulverförmige Klebstoff haftet an der Oberfläche der Folie F aufgrund der elektrostatischen Aufladung der Folie F. Durch die Abstimmung der Größe der Austragöffnung 12 des Auftragmittels 1 auf das Klebstoffpulver wird eine gleichmäßige Bepuderung der Folie F über die gesamte Arbeitsbreite erreicht. Der trockene pulverförmige Klebstoff K bleibt aufgrund der elektrostatischen Aufladung der Folie F an der Folie F haften und wird in weiterer Arbeitsrichtung der Folie X_{F} auf die Wärmeinrichtung 2 in Form der Heizwalze 21 geführt. Die Folie F liegt dabei mit ihrer nicht bepuderten Seite auf der beheizten Oberfläche 22 der Heizwalze 21 auf und umschlingt diese um etwa den halben Umfang. Dabei wird die Folie F und die darauf haftenden pulverförmigen Klebstoffpartikel erwärmt. Der als Schmelzklebstoff ausgebildete pulverförmige Klebstoff schmilzt und bildet somit einen geschlossenen Klebstofffilm, wie es in der Fig. 1 durch die zunächst punktierte Auflage des trockenen Klebstoffpulvers und dann der gestrichelten Linie dargestellt ist.

Im weiteren Lauf in Arbeitsrichtung der Folie X_{F} erreicht dann die Folie die Presseinrichtung 3. Dabei ist die Folie mit ihrer nicht mit Klebstoff versehenen Seite mindestens teilweise um eine Anpresswalze 31 geführt. Im Bereich des Spalts 33 zwischen der Anpresswalze 31 und der Gegenwalze 32 wird die mit der Folie zu kaschierende Druckware ebenfalls als Endlosprodukt von der in Drehrichtung R_{D} rotierenden zweiten Abwickel-Haspel 52 in Arbeitsrichtung der Druckware X_{D} zugeführt. Im Bereich des Spalts 33 der Presseinrichtung 3 wird die Folie F mit dem anhaftendem und angeschmolzenen Klebstoff auf die Druckware aufgepresst. Der erforderliche Pressdruck kann durch geeignete Mittel zwischen der Anpresswalze 31 und der Gegenwalze 32 erzeugt werden. Entsprechend wird eine gleichmäßige, vollflächige Verklebung der Folie F auf der Druckware D erreicht.

Das fertige Produkt wird in Arbeitsrichtung der Folien-kaschierten Druckware X_{FD} weiter zu einer Aufwickel-Haspel 53 geführt, die in Drehrichtung der Folien-kaschierten Druckwarenrolle R_{FD} rotiert.

Alternativ kann die Anpresswalze 31 und die Heizwalze 21 als eine gemeinsame Walze ausgebildet sein. Ebenso kann das Aufladungsmittel 4 an der Kaschiervorrichtung fortgelassen werden, wenn die von der ersten Abwickel-Haspel 51 zugeführte Folie F bereits vor oder bei dem Aufwickeln elektrostatisch aufgeladen worden ist.

### Bezugszeichenliste

- 1: Auftragmittel
- 11: Vorratsbehälter
- 12: Austragöffnung

- 2: Wärmeeinrichtung
- 21: Heizwalze
- 22: beheizte Oberfläche

- 3: Presseinrichtung
- 31: Anpresswalze
- 32: Gegenwalze
- 33: Spalt

- 4: Aufladungsmittel

- 51: erste Abwickel-Haspel
- 52: zweite Abwickel-Haspel
- 53: Aufwickel-Haspel

- D: Druckware
- F: Folie
- K: Klebstoff
- R_{F}: Drehrichtung Folienrolle
- R_{D}: Drehrichtung Druckwarenolle
- R_{FD}: Drehrichtung Folien-kaschierte Druckwarenrolle
- X_{F}: Arbeitsrichtung der Folie
- X_{D}: Arbeitsrichtung der Druckware
- X_{FD}: Arbeitsrichtung der Folien-kaschierten Druckware

## Patentansprüche

1. Kaschierverfahren zur Herstellung von mit einer Folie (F) kaschierter Druckware (D) mit den Schritten
- Auftragen von pulverförmigem Klebstoff (K) auf eine Seite der Folie (F),
- Erwärmen der mit dem pulverförmigem Klebstoff (K) blegten Folie (F) und
- Aufpressen der mit dem erwärmten Klebstoff versehenen Folie (F) auf die zu kaschierende Druckware (D),
**dadurch gekennzeichnet, dass** vor dem Auftragen des pulverförmigen Klebstoffes (K) ein elektrostatisches Aufladen der Fole (F) erfolgt.

2. Kaschierverfahren nach Anspruch 1, **dadurch gekennzeichnet, dass** die Folie (F) zuvor zu einem aufgerollten Endlosprodukt verarbeitet wird und das elektrostatische Aufladen der Folie (F) beim Abrollen der Folie aus dem zuvor aufgerollten Endlosprodukt durch das Abrollen erfolgt.

3. Kaschierverfahren nach Anspruch 1, **dadurch gekennzeichnet, dass** das elektrostatische Aufladen der Folie (F) durch Aufrollen der Folie zu einem aufgerollten Endlosprodukt erfolgt und die Folie (F) erst kurz vor dem Auftragen des Klebstoffes (K) abgerollt wird.

4. Kaschierverfahren nach Anspruch 1 **dadurch gekennzeichnet, dass** das elektrostatische Aufladen der Folie (F) vor dem Aufrollen der Folie zu einem aufgerollten Endlosprodukt erfolgt und die Folie (F) erst kurz vor dem Auftragen des Klebstoffe (K) abgerollt wird.

5. Kaschierverfahren nach Anspruch 2, 3 oder 4, **dadurch gekennzeichnet, dass** die Folie (F) als aufgerolltes Endlosprodukt transportiert und/oder gelagert wird.

6. Kaschierverfahren nach einem der vorgenannten Ansprüche, **dadurch gekennzeichnet, dass** nach dem Auftragen des pulverförmigen Klebstoffes (K) unmittelbar das Erwärmen des Klebstoffes (K) erfolgt.

7. Kaschiervorrichtung zum Kaschieren von Druckwaren (D) mit einer Folie (F) mit in Arbeitsrichtung der Vorrichtung aufgelisteten Merkmalen:
- einem Auftragmittel (1) zum Auftragen von pulverförmigem Klebstoff (K) auf einer Seite der Folie (F),
- einer Wärmeeinrichtung (2) zum Erwärmen der mit dem pulverförmigen Klebstoff (K) belegten Folie (F) und
- einer Presseinrichtung (3) zum Aufpressen der mit dem erwärmten Klebstoff (K) versehenen Folie (F) auf die zu kaschierende Druckware (D),
**dadurch gekennzeichnet, dass** in Arbeitsrichtung vor dem Auftragmittel (1) ein Aufladungsmittel (4) zum elektrostatischen Aufladen der zugeführten Folie (F) vorgesehen ist.

8. Kaschiervorrichtung nach Anspruch 7, **dadurch gekennzeichnet, dass** die Folie (F) endlos auf einer Rolle vorgehalten ist und eine erste Abwickel-Haspel (51) für die aufgerollte Folie (F) in Arbeitsrichtung vor dem Auftragmittel (1) vorgesehen ist.

9. Kaschiervorrichtung nach Anspruch 8, **dadurch gekennzeichnet, dass** die Wärmeeinrichtung (2) eine Heizwalze (21) hat, um die die Folie (F) in wärmeleitendem Kontakt herumgeführt wird.

10. Kaschiervorrichtung nach Anspruch 8 oder 9, **dadurch gekennzeichnet, dass** die Presseinrichtung (3) eine Anpresswalze (31) und eine Gegenwalze (32) oder ein Förderband zum zur zugeführten Folie (F) synchronen Transport der zu kaschierenden Druckware (D) hat.

11. Kaschiervorrichtung nach Anspruch 9 und 10, **dadurch gekennzeichnet, dass** die Heizwalze (21) und die Anpresswalze (31) eine gemeinsame Walze ist.

12. Kaschiervorrichtung nach Anspruch 10 oder 11, **dadurch gekennzeichnet, dass** die Druckware (D) endlos auf einer Rolle vorgehalten ist und eine zweite Abwickel-Haspel (52) für die aufgerollte Druckware (D) in Arbeitsrichtung vor der Anpresswalze (31) vorgesehen ist.

13. Kaschiervorrichtung nach Anspruch 12, **dadurch gekennzeichnet, dass** in Arbeitsrichtung nach der Anpresswalze (31) eine Aufwickel-Haspel (53) vorgesehen ist, mit der die kaschierte Druckware (D) aufgewickelt werden kann.

## Claims

1. Laminating method for producing a printed product (D) laminated with a film (F), having the steps
- applying powdered adhesive (K) to one side of the film (F),
- heating the film (F) coated with the powdered adhesive (K) and
- pressing the film (F) provided with the heated adhesive onto the printed product (D) to be laminated,
**characterised in that** electrostatic charging of the film (F) takes place before the powdered adhesive (K) is applied.

2. Laminating method according to Claim 1, **characterised in that** the film (F) is previously processed to form a rolled-up continuous product and the electrostatic charging of the film (F) takes place during the unrolling of the film from the previously rolled-up continuous product by the unrolling.

3. Laminating method according to Claim 1, **characterised in that** the electrostatic charging of the film (F) takes place by rolling-up the film to form a rolled-up continuous product and the film (F) is unrolled only shortly before the adhesive (K) is applied.

4. Laminating method according to Claim 7, **characterised in that** the electrostatic charging of the film (F) takes place before the film is rolled up to form a rolled-up continuous product and the film (F) is unrolled only shortly before the adhesive (K) is applied.

5. Laminating method according to Claim 2, 3 or 4, **characterised in that** the film (F) is transported and/or stored as a rolled-up continuous product.

6. Laminating method according to one of the preceding claims, **characterised in that** the heating of the adhesive (K) takes place immediately after the powered adhesive (K) has been applied.

7. Laminating device for laminating printed products (D) with a film (F), having, listed in the working direction of the device, the features:
- an application means (1) for applying powdered adhesive (K) to one side of the film (F),
- a heating device (2) for heating the film (F) coated with the powdered adhesive (K) and
- a pressing device (3) for pressing the film (F) provided with the heated adhesive (K) onto the printed product (D) to be laminated,
**characterised in that** a charging means (4) for electrostatically charging the fed film (F) is provided upstream of the application means (1) in the working direction.

8. Laminating device according to Claim 7, **characterised in that** the film (F) is supplied continuously on a roll and a first unwinding reel (51) for the rolled-up film (F) is provided upstream of the application means (1) in the working direction.

9. Laminating device according to Claim 8, **characterised in that** the heating device (2) has a heating roller (21), around which the film (F) is guided in heat-conducting contact.

10. Laminating device according to Claim 8 or 9, **characterised in that** the pressing device (3) has a press roller (31) and a mating roller (32) or a conveyor belt for conveying, synchronously to the fed film (F), the printed product (D) to be laminated.

11. Laminating device according to Claim 9 and 10, **characterised in that** the heating roller (21) and the press roller (31) is a roller in common.

12. Laminating device according to Claim 10 or 11, **characterised in that** the printed product (D) is supplied continuously on a roll and a second unwinding reel (52) for the rolled-up printed product (D) is provided upstream of the press roller (31) in the working direction.

13. Laminating device according to Claim 12, **characterised in that** a winding-up reel (53), by which the laminated printed product (D) can be wound up, is provided downstream of the press roller (31) in the working direction.

## Revendications

1. Procédé de contrecollage pour la fabrication de produits d'imprimerie (D) contrecollés avec un film (F), comportant les étapes suivantes :
- application d'une colle pulvérulente (K) sur une face du film (F),
- chauffage du film (F) recouvert de la colle pulvérulente (K), et
- laminage du film (F) muni de la colle chauffée sur le produit d'imprimerie (D) à contrecoller,
**caractérisé en ce que** le film (F) est chargé électrostatiquement avant l'application de la colle pulvérulente (K).

2. Procédé de contrecollage selon la revendication 1, **caractérisé en ce que** le film (F) est préalablement façonné en un produit sans fin enroulé et **en ce que** le chargement électrostatique du film (F) est réalisé du fait du déroulement lors du déroulement du film du produit sans fin préalablement enroulé.

3. Procédé de contrecollage selon la revendication 1, **caractérisé en ce que** le chargement électrostatique du film (F) est réalisé du fait de l'enroulement du film en un produit sans fin enroulé et le film (F) n'est déroulé que peu de temps avant l'application de la colle (K).

4. Procédé de contrecollage selon la revendication 1, **caractérisé en ce que** le chargement électrostatique du film (F) est réalisé avant l'enroulement du film en un produit sans fin enroulé et le film (F) n'est déroulé que peu de temps avant l'application de la colle (K).

5. Procédé de contrecollage selon l'une des revendications 2, 3 ou 4, **caractérisé en ce que** le film (F) est transporté et/ou stocké sous forme de produit sans fin enroulé.

6. Procédé de contrecollage selon l'une des revendications précédentes, **caractérisé en ce que** le chauffage de la colle (K) est réalisé immédiatement après l'application de la colle (K) pulvérulente.

7. Dispositif de contrecollage pour contrecoller des produits d'imprimerie (D) avec un film (F) avec les caractéristiques suivantes listées dans le sens de travail du dispositif:
- un moyen d'application (1) pour appliquer de la colle pulvérulente (K) sur une face du film (F),
- un dispositif de chauffage (2) pour chauffer le film (F) recouvert de la colle pulvérulente, et
- un dispositif de laminage (3) pour laminer le film (F) muni de la colle (K) pulvérulente chauffée sur le produit d'imprimerie (D) à contrecoller,
**caractérisé en ce qu'**il est prévu avant, considéré dans le sens de travail, le moyen d'application un moyen de chargement (4) pour charger électrostatiquement le film (F) qui y est introduit.

8. Dispositif de contrecollage selon la revendication 7, **caractérisé en ce que** le film (F) est mis à disposition comme produit sans fin sur un rouleau et un premier dérouleur (51) pour le film (F) enroulé est prévu avant, considéré dans le sens de travail, le moyen d'application (1).

9. Dispositif de contrecollage selon la revendication 8, **caractérisé en ce que** le dispositif de chauffage (2) a un rouleau de chauffage (21) autour duquel est mené le film (F) dans un contact conducteur de chaleur.

10. Dispositif de contrecollage selon l'une des revendications 8 ou 9, **caractérisé en ce que** le dispositif de laminage (3) a un rouleau de compression (31) et un contrerouleau (32) ou une bande transporteuse pour transporter le produit d'imprimerie (D) à contrecoller de façon synchronisée avec le film (F) introduit.

11. Dispositif de contrecollage selon la revendication 9 ou 10, **caractérisé en ce que** le rouleau de chauffage (21) et le rouleau de compression (31) forment un même rouleau.

12. Dispositif de contrecollage selon la revendication 10 ou 11, **caractérisé en ce que** le produit d'imprimerie (D) est mis à disposition comme produit sans fin sur un rouleau et un second dérouleur (52) pour le produit d'imprimerie (D) enroulé est prévu avant, considéré dans le sens de travail, le rouleau de compression (31).

13. Dispositif de contrecollage selon la revendication 12, **caractérisé en ce qu'**un enrouleur (53) est prévu après, considéré dans le sens de travail, le rouleau de compression (31) avec lequel le produit d'imprimerie contrecollé (D) peut être enroulé.
